# EUROPÄISCHE PATENTSCHRIFT

(11) **EP 3 273 017 B1**
(45) Veröffentlichungstag und Bekanntmachung des Hinweises auf die Patenterteilung: **18.09.2019**
(21) Anmeldenummer: 17001198.5
(22) Anmeldetag: 13.07.2017
(51) Int. Cl.: F01K 23/10

(54) **VORRICHTUNG ZUR ERZEUGUNG VON NUTZBARER ENERGIE**
DEVICE FOR GENERATING USABLE ENERGY
DISPOSITIF DE PRODUCTION D'ÉNERGIE EXPLOITABLE

(30) Priorität: 19.07.2016 AT 3442016
(43) Veröffentlichungstag der Anmeldung: 24.01.2018
(73) Patentinhaber: MAN Truck & Bus Österreich GesmbH, 4400 Steyr (AT)
(72) Erfinder: Klammer, Josef, 4400 Steyr (AT); Robausch, Stefan, 4400 St. Ulrich bei Steyr (AT)
(74) Vertreter: Liebl, Thomas

(56) Entgegenhaltungen:
- EP-A1- 2 280 152
- WO-A1-2015/080697
- DE-A1-102014 225 059

## Beschreibung

Die Erfindung betrifft eine Vorrichtung zur Erzeugung von nutzbarer Energie nach dem Oberbegriff des Patentanspruches 1 sowie ein Fahrzeug, insbesondere ein Nutzfahrzeug, mit der Vorrichtung.

Es ist bekannt, an einer Brennkraftmaschine ein System zur Abwärmenutzung (Waste Heat Recovery WHR) vorzusehen, mittels der aus der Wärmeenergie eines von der Brennkraftmaschine emittierten Abgases nutzbare Energie, beispielsweise in Form von elektrischer oder mechanischer Energie, erzeugt werden kann bzw. mittels der die Wärmeenergie des Abgases in eine nutzbare Energieform umgewandelt werden kann. Die nutzbare Energie wird dabei üblicherweise mittels eines rechtsläufigen thermodynamischen Kreisprozesses, beispielsweise mittels eines Dampfkreisprozesses, erzeugt.

Bei dem Dampfkreisprozess wird ein Arbeitsmedium mittels einer Pumpe auf ein hohes Druckniveau gebracht und anschließend in einem Verdampfer verdampft und überhitzt. Der überhitzte Dampf wird dann einer Expansionsmaschine, beispielsweise einer Kolbenmaschine oder einer Turbine, zugeführt, die die im Dampf gespeicherte Energie in nutzbare Energie, insbesondere mechanische oder elektrische Energie, umwandelt. Schließlich wird der Dampf mittels eines Kondensators wieder verflüssigt und das flüssige Arbeitsmedium wieder der Pumpe zugeführt.

Es zudem bekannt, dem Arbeitsmedium des Kreisprozesses Zusätze beizumischen. Ein derartiger Zusatz ist beispielsweise ein Schmiermedium, insbesondere ein Schmieröl, zur Schmierung von bewegten Teilen des Kreisprozesses, beispielsweise von bewegten Teilen einer Pumpe, einer Expansionsmaschine oder Ventilen des Kreisprozesses.

Des Weiteren wird in bekannten Systemen zur Abwärmenutzung mittels eines Dampfkreisprozesses der Volumenstrom des Arbeitsmediums zu dem wenigstens einem Verdampfer des Kreisprozesses regelmäßig anhand der gewünschten maximalen Überhitzungstemperatur des Arbeitsmediums geregelt. Steigt die Temperatur des überhitzten Arbeitsmediums über einen definierten Sollwert für die maximale Überhitzungstemperatur, wird dabei der Volumenstrom zu dem Verdampfer erhöht. Sinkt die Temperatur des Arbeitsmediums unter diesen Sollwert, wird der Volumenstrom zu dem Verdampfer entsprechend reduziert. Für eine derartige Regelung ist es wichtig, die tatsächliche maximal auftretende Temperatur des überhitzten Arbeitsmediums mit einer hohen Genauigkeit zu messen, um den Dampfkreisprozesses in einem Bereich mit hohem Wirkungsgrad betreiben zu können. Bei einer höheren Überhitzungstemperatur des Arbeitsmediums wird ein höherer Wirkungsgrad des Dampfkreisprozesses erreicht, jedoch gibt es auch Temperaturobergrenzen für Bauteile und Medien des Dampfkreislaufs. So können sich beispielsweise aufgrund der thermischen Stabilität des Schmieröls Zersetzungsprodukte im Schmieröl bilden.

Üblicherweise wird ein Temperatursensor zur Messung der maximalen auftretenden Überhitzungstemperatur des Arbeitsmediums nahe am Fluidaustritt des Verdampfers angeordnet, um möglichst die maximal auftretende Temperatur des dampfförmigen Arbeitsmediums zu messen. Wird dem Arbeitsmedium beispielsweise Schmieröl als Zusatz beigemischt, verdampft das Schmieröl beim Durchströmen des Verdampfers normalerweise nicht, wodurch das Schmieröl auch am Fluidaustritt des Verdampfers flüssig ist. Das flüssige Schmieröl bzw. die flüssigen Öltropfen besitzen im Vergleich zum verdampften Arbeitsmedium, beispielsweise im Vergleich zu Ethanol als Arbeitsmedium, eine höhere Wärmekapazität pro Volumen und erfahren daher im Vergleich zum verdampften Arbeitsmedium am Fluidaustritt des Verdampfers einen deutlich geringeren Temperaturanstieg. Zusätzlich zu der höheren erforderlichen Wärmemenge zur weiteren Erwärmung der flüssigen Öltropfen ist auch der Wärmeübergang von dem die Öltropfen umgebenden Arbeitsmedium-Dampf auf die Öltropfen gering. Am Fluidaustritt des Verdampfers weist der Arbeitsmedium-Dampf daher eine höhere Temperatur auf als die mitströmenden flüssigen Öltropfen.

Erfolgt nun die Messung der maximalen Überhitzungstemperatur des Arbeitsmediums unmittelbar am Fluidaustritt des Verdampfers, kann der Effekt auftreten, dass sich flüssiges Schmieröl am Temperatursensor anlegt und die niedrigere Temperatur des Schmieröls mittels des Temperatursensors gemessen wird. Die tatsächliche maximale Überhitzungstemperatur des verdampften Arbeitsmediums bleibt dann unbekannt. Aufgrund der guten Eigenschaften des Schmieröls zur Oberflächenbenetzung wird das Anlegen des Schmieröls am Temperatursensor dabei noch weiter begünstigt. Diese ungenaue Messung der maximalen Temperatur des verdampften Arbeitsmediums erschwert die Regelung des Volumenstroms des Arbeitsmediums zum Verdampfer hin deutlich und kann dazu führen, dass das Arbeitsmedium tatsächlich höhere Temperaturen aufweist als gemessen und somit über der Temperaturgrenze für die Langzeitstabilität liegt.

Aus der DE 10 2014 225 059 A1 ist ein Verfahren zum Betrieb einer Abwärmenutzungsanordnung einer Brennkraftmaschine bekannt, bei dem in einem Verdampfer der Abwärmenutzungsanordnung ein von der Brennkraftmaschine ausgestoßenes Abgas als Wärmequelle verwendet wird und dadurch ein Arbeitsmedium in dem zumindest einen Verdampfer verdampft wird. Dabei wird hier eine Leckage des Arbeitsmediums innerhalb des zumindest einen Verdampfers in den Abgaskanal aus einem gemessenen physikalischen Wert ermittelt.

Die weitere WO 2015/080697 A1 offenbart ein Abwärmenutzungssystem, bei der ein Arbeitsmedium-Kreislauf und ein mit dem Arbeitsmedium-Kreislauf verbundener Heizkessel zur Rückgewinnung von Energie aus einer Energiequelle und zum Übertragen der rückgewonnenen Energie auf das Arbeitsmedium vorgesehen sind. Zudem sind hier auch eine mit dem Arbeitsmedium-Kreislauf verbundene Expansionsmaschine zur Aufnahme des Arbeitsmediums aus dem Heizkessel und eine unterstützende Heizanordnung zur Zuführung von Hitze an das Arbeitsmedium vorgesehen.

Aus der EP 2 280 152 A1 ist ein Abwärmenutzungssystem bekannt, bei der eine Expansionsmaschine durch Verdampfen eines Arbeitsmediums durch Abwärme eines Verbrennungsmotors angetrieben wird.

Aufgabe der Erfindung ist es, eine Vorrichtung zur Erzeugung von nutzbarer Energie bereitzustellen, mittels der die Temperatur des aus dem Verdichter ausströmenden Arbeitsmediums mit besonders hoher Genauigkeit gemessen werden kann.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Vorrichtung zur Erzeugung von nutzbarer Energie vorgeschlagen, wobei die Energie nach dem Prinzip eines rechtsläufigen thermodynamischen Kreisprozesses, insbesondere eines Dampfkreisprozesses, erzeugt werden kann, wobei wenigstens ein durchgehender Strömungskanal vorgesehen ist, durch den ein mehrere Komponenten aufweisendes Kreisprozess-Fluid des Kreisprozesses strömt, wobei wenigstens ein, einen Verdampfer bildender, insbesondere wärmeaufnehmender, Wärmeübertrager vorgesehen ist, mittels dem dem Kreisprozess-Fluid Wärmeenergie zugeführt werden kann, so dass ein Arbeitsmedium als Komponente des Kreisprozess-Fluides verdampft, und wobei in einem definierten Nahbereich im Bereich eines Fluidaustritts des Verdampfers ein Temperatursensor angeordnet ist, mittels dem die Temperatur des aus dem Verdampfer ausströmenden Kreisprozess-Fluides gemessen werden kann. Erfindungsgemäß ist dem Temperatursensor wenigstens ein Abschirmelement bzw. Ablenkelement zugeordnet, mittels dem der Temperatursensor derart, insbesondere strömungstechnisch, abgeschirmt ist, das zumindest ein Teil, insbesondere wenigstens eine nicht verdampfte flüssige Komponente, des auf dem Temperatorsensor zuströmenden Kreisprozess-Fluids mittels des Abschirmelements an dem Temperatursensor, insbesondere an einem Messbereich des Temperatursensors, vorbeigeleitet werden kann.

Auf diese Weise kann die Temperatur des aus dem Verdampfer ausströmenden Arbeitsmediums mit deutlich erhöhter Genauigkeit gemessen werden, da das auf dem Temperatursensor zuströmende Kreisprozess-Fluid, das neben dem verdampften Arbeitsmedium auch eine weitere Komponente mit einer geringeren Temperatur als das verdampfte Arbeitsmedium aufweisen kann, nun an dem Temperatursensor vorbeigeleitet wird. Dadurch wird einem Anlagern der weiteren Komponente, insbesondere eines nicht verdampften flüssigen Mediums, an dem Temperatursensor zuverlässig entgegengewirkt, so dass mittels des Temperatursensors die tatsächliche Temperatur des verdampften Arbeitsmediums gemessen wird.

In einer bevorzugten Ausgestaltung der erfindungsgemäßen Vorrichtung ist das Abschirmelement derart ausgebildet, dass die wenigstens eine sich von dem Abschirmelement ablösende flüssige Komponente des Kreisprozess-Fluids nicht auf den Temperatursensor, insbesondere nicht auf den Messbereich des Temperatursensors, trifft, um die Temperatur des Arbeitsmediums mit hoher Genauigkeit messen zu können. Bevorzugt wird die flüssige und daher trägere Komponente des Kreisprozess-Fluids dabei mittels des Abschirmelements am Temperatursensor vorbeigeleitet, während das dampfförmige Arbeitsmedium stromab des Abschirmelements wieder zusammenströmt und auf den Temperatursensor trifft.

Weiter bevorzugt ist vorgesehen, dass das Abschirmelement oder ein Abschirmbereich des Abschirmelements, im Querschnitt quer durch den Strömungskanal gesehen, den Temperatursensor, insbesondere den Messbereich des Temperatursensors, vorzugsweise vollständig, verdeckt und/oder, vorzugsweise in alle Richtungen, nach außen überragt. So kann das auf den Temperatursensor zuströmende Kreisprozess-Fluid einfach und effektiv an dem Temperatursensor vorbeigeleitet werden.

Bevorzugt ragt ein Messbereich des Temperatursensors, insbesondere mit einem definierten Abstand zu einer den Strömungskanal bildenden Kanalwand, in den Strömungskanal ein, um die Temperatur des überhitzten Arbeitsmediums mit hoher Genauigkeit messen zu können. Bevorzugt ist dabei vorgesehen, dass der Temperatursensor derart in den Strömungskanal einragt, dass der Messbereich des Temperatursensors, im Querschnitt quer durch den Strömungskanal gesehen, im Wesentlichen zentral in den Strömungskanal angeordnet ist.

In einer bevorzugten konkreten Ausgestaltung ist das Abschirmelement durch einen, insbesondere länglichen, Profilkörper gebildet, um das Abschirmelement einfach, kostengünstig und gleichzeitig effektiv auszubilden. Bevorzugt ist dabei vorgesehen, dass das Abschirmelement mit einem Profil-Endbereich in den Strömungskanal einragt und mit seinem anderen Profil-Endbereich an einem, den Strömungskanal bildenden Körper festgelegt ist. Das Abschirmelement kann dabei durch eine Ausnehmung in einer Wand des Körpers geführt sein und beispielsweise mittels einer Schneidringverbindung an dem Körper festgelegt sein.

Vorzugsweise ist der Temperatursensor durch ein Thermoelement gebildet, um den Temperatursensor einfach und effektiv auszubilden. Alternativ kann der Temperatursensor beispielsweise auch durch einen Widerstandstemperatursensor gebildet sein. Weiter bevorzugt ist der Temperatursensor im Wesentlichen stabförmig ausgebildet. Alternativ kann der Temperatursensor beispielsweise auch abgestuft, konisch oder zapfenförmig sein.

In einer weiteren bevorzugten Ausgestaltung ist das Abschirmelement, in Fluid-Strömungsrichtung gesehen, stromauf des Temperatursensors angeordnet, um das auf den Temperatursensor zuströmende Kreisprozess-Fluid baulich einfach und effektiv vor dem Temperatursensor abzulenken. Bevorzugt ist dabei vorgesehen, dass der Temperatursensor im Windschatten bzw. im Fluidschatten des Abschirmelements angeordnet ist.

Besonders bevorzugt weist das stromauf des Temperatursensors angeordnete Abschirmelement wenigstens eine Ablösekante auf, an der sich die an das Abschirmelement angelegte, nicht verdampfte flüssige Komponente des Kreisprozess-Fluids von dem Abschirmelement ablöst, wobei die wenigstens eine Ablösekante derart angeordnet und ausgebildet ist, dass die abgelöste nicht verdampfte flüssige Komponente des Kreisprozess-Fluids an dem Temperatursensor, insbesondere an dem Messbereich des Temperatursensors, vorbeiströmt. So kann die flüssige Komponente des Kreisprozess-Fluids effektiv an dem Temperatursensor vorbeigeleitet werden und gleichzeitig die Temperatur des verdampften Arbeitsmediums mit hoher Genauigkeit mittels des Temperatursensors gemessen werden.

Vorzugsweise bevorzugt ist das Abschirmelement mit einem definierten Abstand von dem Temperatursensor beabstandet angeordnet, um den Aufbau weiter zu vereinfachen und gleichzeitig die Temperatur des Arbeitsmedium mit hoher Genauigkeit messen zu können. Weiter bevorzugt ist das Abschirmelement in einem definierten Nahbereich im Bereich des Temperatursensors angeordnet.

In einer bevorzugten konkreten Ausgestaltung ist das stromauf des Temperatursensors angeordnete Abschirmelement im Wesentlichen keilförmig ausgebildet, um das Abschirmelement einfach und funktionssicher zu gestalten. Bevorzugt ist dabei vorgesehen, dass das Abschirmelement mit einer Keilspitze bzw. mit einer Keilschneide von dem Temperatursensor abgewandt angeordnet ist. Weiter bevorzugt ist es, wenn die Höhe bzw. Breite des keilförmigen Abschirmelements in Fluid-Strömungsrichtung zunimmt, um den Strömungswiderstand des keilförmigen Abstandelements zu verringern und definierte Ablösekanten für das nicht verdampfte Kreisprozess-Fluid zu bilden, die vorzugsweise breiter sind als der Temperatursensor selbst.

Alternativ zu der Keilform kann das stromauf des Temperatursensors angeordnete, durch einen Profilkörper gebildete Abschirmelement auch im Querschnitt sichelförmig ausgebildet sein. Bevorzugt ist dabei vorgesehen, dass das sichelförmige Abschirmelement mit einer, eine konkave Oberfläche aufweisenden Innenseite dem Temperatursensor zugewandt angeordnet ist, um den Strömungswiderstand des sichelförmigen Abschirmelements zu verringern und definierte Ablösekanten für das nicht verdampfte Kreisprozess-Fluid zu bilden, die vorzugsweise breiter sind als der Temperatursensor selbst.

In einer weiteren bevorzugten Ausgestaltung umgreift das Abschirmelement den, insbesondere stabförmigen, Temperatursensor, insbesondere mit einem definierten Spaltabstand, zumindest bereichsweise ringförmig. So kann das auf den Temperatursensor zuströmende Kreisprozess-Fluid ebenfalls einfach und effektiv vor dem Temperatursensor abgelenkt werden.

In einer bevorzugten konkreten Ausgestaltung ist das durch einen Profilkörper gebildete Abschirmelement halbrohrförmig und/oder im Querschnitt C-förmig ausgebildet, um das Abschirmelement kostengünstig, einfach und gleichzeitig effektiv auszubilden. Alternativ kann das Abschirmelement auch durch ein, insbesondere gerades, Rohrelement gebildet sein, durch dessen Aufnahmeraum der Temperatursensor, insbesondere mit einem definierten Spaltabstand, geführt ist, um das Abschirmelement besonders einfach auszubilden.

Vorzugsweise ist ein in den Strömungskanal einragender Endbereich des Rohrelements abgeschrägt, insbesondere schräg abgeschnitten, um das auf den Temperatursensor zuströmende Kreisprozess-Fluid vor dem Temperatursensor abzulenken und gleichzeitig auch die Temperatur des dampfförmigen Arbeitsmediums mittels des Temperatursensors messen zu können. Weiter bevorzugt ist vorgesehen, dass der Temperatursensor, insbesondere ein Messbereich des Temperatursensors, an einem in dem Strömungskanal einragenden Endbereich des Rohrelements von dem Rohrelement abragt bzw. aus dem Aufnahmeraum des Rohrelements herausragt, um die Temperatur des an dem Temperatursensor vorbeiströmenden Arbeitsmediums messen zu können.

In einer bevorzugten konkreten Ausgestaltung ist der Temperatursensor, in Fluid-Strömungsrichtung gesehen, stromab des Verdampfers angeordnet. Bevorzugt ist dabei vorgesehen, dass der Temperatursensor, insbesondere der Temperatursensor und das Abschirmelement, einer, insbesondere rohrförmigen, Fluidleitung zugeordnet ist, mittels der der Verdampfer strömungstechnisch mit einer stromab des Verdampfers angeordneten Expansionsmaschine des Kreisprozesses verbunden ist. So kann der Temperatursensor, insbesondere der Temperatursensor und das Abschirmelement, besonders einfach befestigt werden.

Zweckmäßig kann das Arbeitsmedium des Kreisprozesses beispielsweise durch Ethanol gebildet sein. Bevorzugt weist das Kreisprozess-Fluid als weitere Komponente ein Medium auf, das keine oder eine höhere Siedetemperatur als das Arbeitsmedium aufweist. Weiter bevorzugt weist das Kreisprozess-Fluid als weitere Komponente ein Schmiermedium, insbesondere ein Schmieröl, zur Schmierung von bewegten Bauteilen im Kreisprozess auf.

Weiter bevorzugt bilden der Temperatursensor und das wenigstens eine zugeordnete Abschirmelement eine Baueinheit bzw. Montageeinheit aus, um die Montage des Temperatursensor und des Abschirmelements zu vereinfachen.

Des Weiteren wird auch ein Fahrzeug, insbesondere ein Nutzfahrzeug, mit der erfindungsgemäßen Vorrichtung beansprucht. Die sich hieraus ergebenden Vorteile sind identisch mit den bereits gewürdigten Vorteilen der erfindungsgemäßen Vorrichtung, so dass diese an dieser Stelle nicht wiederholt werden.

In einer bevorzugten Ausgestaltung des erfindungsgemäßen Fahrzeugs wird die nutzbare Energie mittels einer Energie-Rückgewinnungseinrichtung des Fahrzeugs erzeugt, mittels der nach dem Prinzip eines thermodynamischen Kreisprozesses, insbesondere eines Dampfkreisprozesses, aus der Wärmeenergie eines von der Brennkraftmaschine des Fahrzeugs emittierten Abgases nutzbare Energie rückgewonnen bzw. erzeugt werden kann. Auf diese Weise kann das Fahrzeug besonders energieeffizient betrieben werden.

Alternativ zu dem Fahrzeug kann die erfindungsgemäße Vorrichtung aber auch an einer stationären bzw. ortsfesten Brennkraftmaschine vorgesehen sein. Die Anmelderin behält sich diesbezüglich das Recht vor, auch eine derartige stationäre Brennkraftmaschine mit der erfindungsgemäßen Vorrichtung zu beanspruchen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: eine schematische Darstellung, anhand der der Aufbau der erfindungsgemäßen Vorrichtung erläutert wird;
- Fig. 2: ein Temperatur-Weg-Diagramm eines Verdampfers, anhand dem die Funktion der Vorrichtung erläutert wird;
- Fig. 3: die Vorrichtung in einer teilweisen Schnittdarstellung;
- Fig. 4: die Vorrichtung in einer weiteren Schnittdarstellung;
- Fig. 5: die Vorrichtung in einer weiteren Schnittdarstellung;
- Fig. 6: in einer Darstellung gemäß Fig. 4 eine zweite Ausführungsform der erfindungsgemäßen Vorrichtung;
- Fig. 7: in einer Darstellung gemäß Fig. 4 eine dritte Ausführungsform der erfindungsgemäßen Vorrichtung; und
- Fig. 8: in einer Darstellung gemäß Fig. 2 eine vierte Ausführungsform der erfindungsgemäßen Vorrichtung.

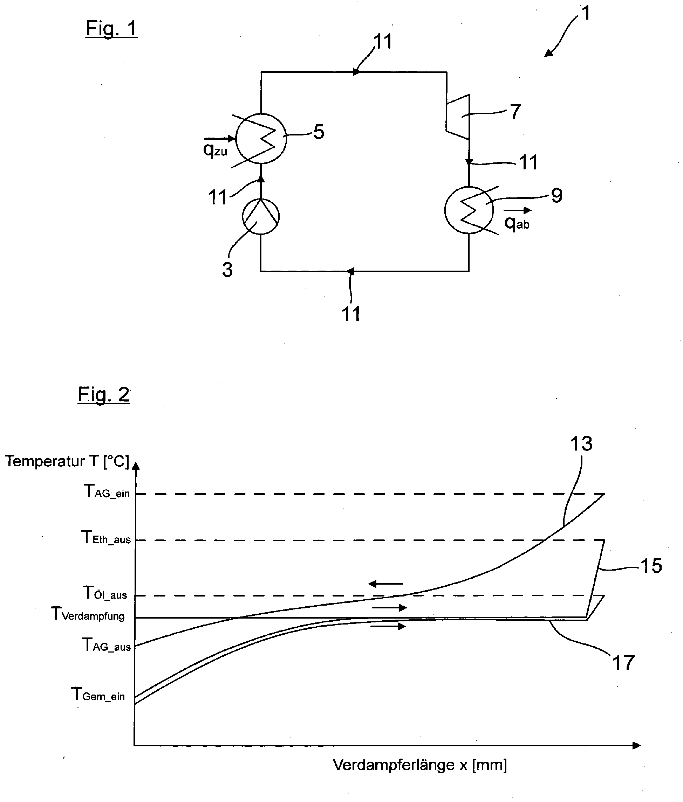

In Fig. 1 ist eine schematische Darstellung einer erfindungsgemäßen Vorrichtung 1 gezeigt, mittels der hier beispielhaft nach dem Prinzip eines rechtsläufigen thermodynamischen Dampfkreisprozesses Wärmeenergie in nutzbare Energie, beispielsweise in Form von mechanischer Energie, umgewandelt werden kann. Die Vorrichtung 1 ist hier dabei Bestandteil einer in den Figuren nicht weiter gezeigten Energie-Rückgewinnungseinrichtung eines Fahrzeugs, mittels der aus der Wärmeenergie eines von einer Brennkraftmaschine des Fahrzeugs emittierten Abgases Energie rückgewonnen bzw. erzeugt werden kann.

Die Vorrichtung 1 weist hier, in Fluid-Strömungsrichtung gesehen, eine Pumpe 3, einen, einen Verdampfer bildenden wärmeaufnehmenden Wärmeübertrager 5, eine, eine Expansionsmaschine bildende Turbine 7, sowie einen, einen Kondensator bildenden wärmeabführenden Wärmeübertrager 9 auf. Mittels der Pumpe 3 wird ein Arbeitsmedium eines Kreisprozess-Fluids 11 zunächst auf ein höheres Druckniveau gebracht. Anschließend wird das Arbeitsmedium in dem Verdampfer 5 verdampft und überhitzt. Das überhitzte Arbeitsmedium wird dann in der Turbine 7 entspannt bzw. expandiert, wodurch ein Turbinenrad der Turbine 7 angetrieben und somit nutzbare mechanische Energie erzeugt wird. Schließlich wird das entspannte Arbeitsmedium dann noch mittels des Kondensators 9 abgekühlt, so dass das Arbeitsmedium kondensiert. Das Arbeitsmedium ist hier beispielhaft durch Ethanol gebildet. Das Kreisprozess-Fluid 11 weist neben dem Ethanol als weitere Komponente hier beispielhaft auch ein Schmieröl auf, mittels dem bewegte Bauteile des Kreisprozesses geschmiert werden.

In Fig. 2 ist ein Diagramm gezeigt, das die Erwärmung des Kreisprozess-Fluides 11 mittels des hier beispielhaft nach dem Gegenstromprinzip arbeitenden Verdampfers 5 schematisch zeigt. Eine Kurve 13 zeigt hier dabei den Temperaturverlauf eines durch den Verdampfer 5 entgegengesetzt zu dem Kreisprozess-Fluid 11 strömenden Abgases der Brennkraftmaschine. Im Bereich eines Fluidaustritts des Verdampfers 5, an dem das Kreisprozess-Fluid aus dem Verdampfer 5 ausströmt, strömt das Abgas der Brennkraftmaschine hier mit einer hohen Temperatur T_{AG_ein} in den Verdampfer 5 ein. Während das Abgas den Verdampfer 5 durchströmt, verringert sich die Temperatur des Abgases bis zu einer Temperatur T_{AG_aus} mit der das Abgas aus dem Verdampfer 5 ausströmt.

Des Weiteren zeigt eine Kurve 15 des Diagramms hier den Temperaturverlauf des durch den Verdampfer 5 strömenden Ethanols des Kreisprozess-Fluids 11. Eine Kurve 17 des Diagramms zeigt den Temperaturverlauf des durch den Verdampfer 5 strömenden Schmieröls des Kreisprozess-Fluids 11. Das Ethanol und das Schmieröl sind an einem Fluideintritt des Verdampfers 5, an dem das Kreisprozess-Fluid 11 in den Verdampfer 5 einströmt, flüssig und strömen mit der Gemischtemperatur T_{Gem_ein} in den Verdampfer 5 ein. Das Ethanol und das Schmieröl werden dann von dem durch den Verdampfer 5 strömenden Abgas erwärmt. Die Erwärmung des Ethanols und des Schmieröls erfolgt dabei zunächst im Wesentlichen gleich. Ab einer Verdampfungstemperatur T_{Verdampfung} kommt es dann zu einer Verdampfung des flüssigen Ethanols, so dass das Ethanol in den gasförmigen Zustand übergeht. Bis zur vollständigen Verdampfung ist dieser Vorgang isotherm, wodurch die Temperatur des Ethanols und des Schmieröls im Wesentlichen konstant bleibt. Nach der Verdampfung des Ethanols liegen hier dann Ethanol-Sattdampf und flüssiges Schmieröl in Form von Tröpfen mit derselben Temperatur T_{Verdampfung} vor. Vor dem Austritt des Kreisprozess-Fluids 11 aus dem Verdampfer 5 wird dem Kreisprozess-Fluid 11 noch weiter Wärme zugeführt. In diesem Bereich des Verdampfers 5 ist die übertragene Wärme aufgrund des hohen Temperaturunterschieds zur Wärmequelle bzw. zu dem Abgas sehr hoch. Dadurch wird das dampfförmige Ethanol überhitzt, wobei der Temperaturanstieg des Ethanoldampfs vergleichsweise steile Gradienten aufweist. Das nach wie vor flüssige Schmieröl besitzt im Vergleich zum Ethanoldampf eine deutliche höhere Wärmekapazität pro Volumen und erfährt hier daher nur einen deutlich geringeren Temperaturanstieg. Zusätzlich zu der höheren erforderlichen Wärmemenge zur weiteren Erwärmung der Öltropfen ist auch der Wärmeübergang von dem Ethanoldampf auf die Öltropfen gering. Somit tritt der Ethanoldampf hier mit höherer Temperatur T_{Eth_aus} aus dem Verdampfer 5 aus als die flüssigen Öltropfen mit T_{Öl_aus}.

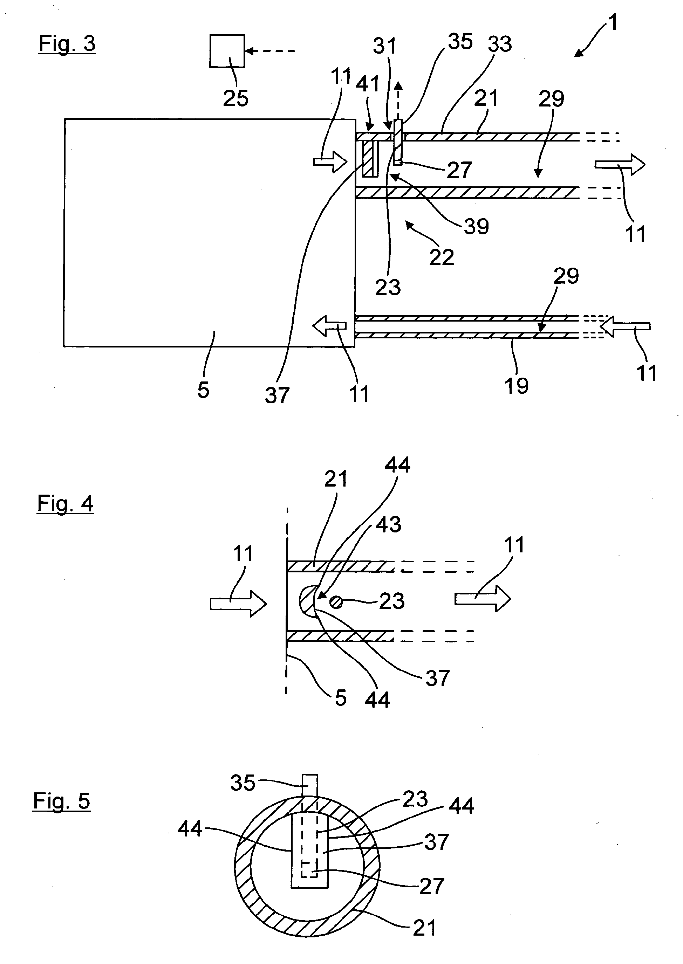

In Fig. 3 ist der Verdampfer 5 zusammen mit zwei in Schnittdarstellung gezeigten Fluidleitungen 19, 21 gezeigt. Mittels der Fluidleitung 19 wird dem Verdampfer 5 dabei das von der Pumpe 3 kommende Kreisprozess-Fluid 11 zugeführt. Mittels der Fluidleitung 21 wird der Turbine 7 das von dem Verdampfer 5 kommende überhitzte Kreisprozess-Fluid 11 zugeführt. Die Fluidleitungen 19, 21 sind hier beispielhaft durch Rohrleitungen gebildet. Wie aus Fig. 3 hervorgeht, ist in einem definierten Nahbereich im Bereich eines Fluidaustritts 22 des Verdampfers 5, an dem das Kreisprozess-Fluid 11 aus dem Verdampfer 5 austritt, ein Temperatursensor 23 angeordnet, mittels dem die Temperatur des aus dem Verdampfer 5 ausströmenden Kreisprozess-Fluides 11 gemessen werden kann. Mittels des Temperatursensors 23 soll dabei die tatsächliche maximal auftretende Temperatur des aus dem Verdampfer 5 ausströmenden Ethanols gemessen werden. Mittels dieses gemessenen Temperatur wird hier dann der Volumenstrom des Kreisprozess-Fluids 11 zu dem Verdampfer 5 mittels eines signaltechnisch mit dem Temperatursensor 23 verbundenen Steuergeräts 25 gesteuert bzw. geregelt.

Der Temperatursensor 23 ist hier beispielhaft durch ein im Wesentlichen stabförmiges Thermoelement gebildet und der Fluidleitung 21 zugeordnet bzw. stromab des Verdampfers 5 angeordnet. Ein Messbereich 27 des Temperatursensors 23 ragt hier dabei derart in einen Strömungskanal 29 der Vorrichtung 1 ein, dass der Messbereich 27, im in Fig. 5 gezeigten Querschnitt quer zur Strömungsrichtung gesehen, im Wesentlichen zentral bzw. radial mittig in dem Strömungskanal 29 angeordnet ist. Zudem ist der stabförmige Temperatursensor 23 hier abgedichtet durch eine Ausnehmung 31 (Fig. 3) in einer Wand 33 der Rohrleitung 21 geführt. Der Temperatursensor 23 kann beispielsweise mittels einer Schraubverbindung, einer Steckverbindung oder einer Schneidringverbindung an der Rohrleitung 21 festgelegt sein.

Wie aus Fig. 3 weiter hervorgeht, ist dem Temperatursensor 23 ein Abschirmelement 37 zugeordnet, mittels dem der Temperatursensor 23 derart strömungstechnisch abgeschirmt ist, das zumindest ein Teil des auf den Temperatursensor 23 zuströmenden Kreisprozess-Fluids 11 mittels des Abschirmelements 37 an dem Temperatursensor 23 vorbeigeleitet wird. Das Abschirmelement 37 ist hier beispielhaft, in Fluid-Strömungsrichtung gesehen, stromauf des Temperatursensors 23 angeordnet und ebenso wie der Temperatursensor 23 der Fluidleitung 21 zugeordnet bzw. stromab des Verdampfers 5 angeordnet. Konkret wird hier das auf den Temperatursensor 23 zuströmende Kreisprozess-Fluid mittels des Abschirmelements 37 derart abgelenkt, dass das nicht verdampfte flüssige Schmieröl des Kreisprozess-Fluids an dem Messbereich 27 des Temperatursensors 23 vorbeigeleitet werden, während das dampfförmige Ethanol stromab des Abschirmelements 37 auf den Messbereich 27 trifft.

Des Weiteren ist das Abschirmelement 37 hier beispielhaft durch einen länglichen Profilkörper gebildet. Mit einem Profil-Endbereich 39 ragt das Abschirmelement 37 hier dabei in den Strömungskanal 29 ein, während das Abschirmelement 37 mit seinem anderen Profil-Endbereich 41 an der Wand 33 der Rohrleitung 21 festgelegt ist. Zudem sind der stabförmige Temperatursensor 23 und das Abschirmelement 37 hier parallel zueinander ausgerichtet. Des Weiteren ist das Abschirmelement 37 hier, in Rohrleitungs-Umfangsrichtung gesehen, an demselben Umfangsbereich wie der Temperatursensor 23 an der Rohrleitung 21 befestigt. Zudem ragt das Abschirmelement 37 derart weit in den Strömungskanal 29 ein, dass es den Temperatursensor 23 radial nach außen überragt.

Wie weiter aus Fig. 4 hervorgeht, ist das durch einen Profilkörper gebildete Abschirmelement 37 hier im Querschnitt sichelförmig bzw. mondsichelförmig ausgebildet. Das sichelförmige Abschirmelement 37 ist dabei mit einer, eine konkave Oberfläche aufweisenden Innenseite 43 dem Temperatursensor 23 zugewandt angeordnet. Gemäß Fig. 4 und 5 ist das sichelförmige Abschirmelement 37 hier zudem derart breit ausgebildet, dass es den Temperatursensor 23 beidseitig radial nach außen überragt. Somit wird der Messbereich 27 des Temperatursensors 23 hier, im in Fig. 5 gezeigten Querschnitt quer zur Strömungsrichtung gesehen, gänzlich durch das Abschirmelement 37 verdeckt bzw. auch in allen Radialrichtungen des Strömungskanals 29 von dem Abschirmelement 37 überragt. Des Weiteren ist das Abschirmelement 37 hier auch von dem Temperatursensor 23 beabstandet angeordnet und in einem definierten Nahbereich im Bereich des Abschirmelements 37 angeordnet.

Das stromauf des Temperatursensors 23 angeordnete Abschirmelement 37 weist hier somit zwei Ablösekanten 44 auf, an der sich das an das Abschirmelement 37 angelegte, nicht verdampfte flüssige Schmieröl des Kreisprozess-Fluids von dem Abschirmelement 37 ablöst. Die Ablösekanten 44 sind dabei derart angeordnet und ausgebildet ist, dass das abgelöste nicht verdampfte Schmieröl an dem Temperatursensor 23 vorbeiströmt.

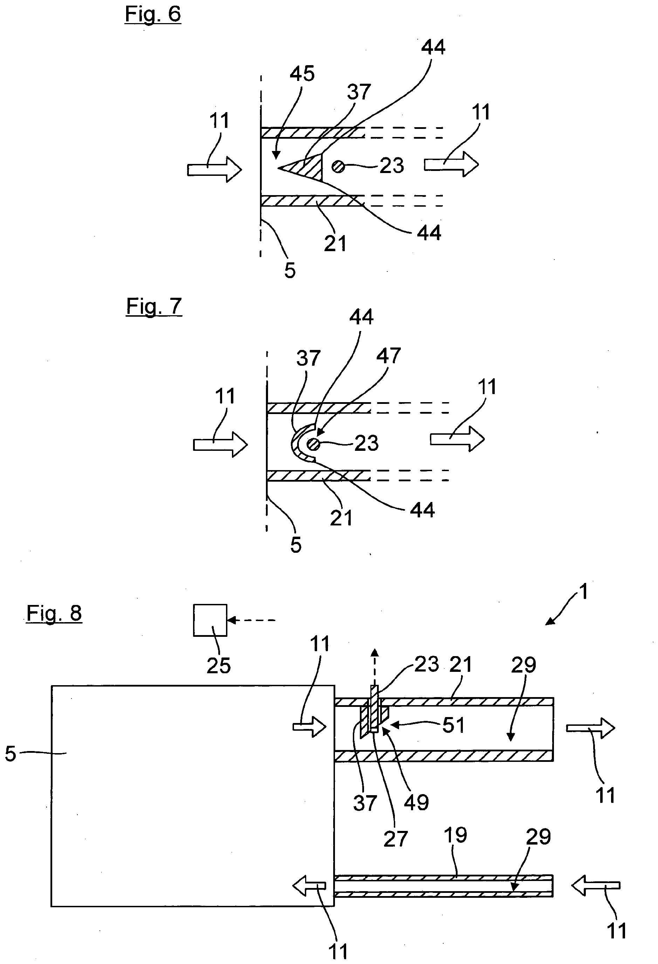

In Fig. 6 ist eine zweite Ausführungsform des Abschirmelements 37 gezeigt. Im Vergleich zu der in Fig. 4 gezeigten ersten Ausführungsform ist das Abschirmelement 37 hier nicht im Querschnitt sichelförmig ausgebildet, sondern insgesamt keilförmig ausgebildet. Das keilförmige Abschirmelement 37 ist dabei mit einer Keilspitze bzw. Keilschneide 45 von dem Temperatursensor 23 abgewandt angeordnet. Zudem nimmt die Höhe bzw. Breite des keilförmigen Abschirmelements 37 hier in Fluid-Strömungsrichtung zu.

In Fig. 7 ist eine dritte Ausführungsform des Abschirmelements 37 gezeigt. Im Vergleich zu dem in Fig. 4 gezeigten Abschirmelement 37 ist das durch einen Profilkörper gebildete Abschirmelement 37 hier halbrohrförmig bzw. im Querschnitt C-förmig ausgebildet. Das halbrohrförmige Abschirmelement 37 umgreift den stabförmigen Temperatursensor 23 hier dabei bereichsweise mit einem definierten Spaltabstand. Zudem ist das halbrohrförmige Abschirmelement 37 hier ebenfalls mit einer, eine konkave Oberflaäche aufweisenden Innenseite 47 dem Temperatursensor 23 zugewandt angeordnet.

In Fig. 8 ist eine vierte Ausführungsform des Abschirmelements 37 gezeigt. Im Vergleich zu der in Fig. 3 gezeigten ersten Ausführungsform des Abschirmelements 37 ist das Abschirmelement 37 hier durch ein gerades Rohrelement gebildet, durch dessen Aufnahmeraum 49 der Temperatursensor 23 mit einem definierten Spaltabschnitt geführt ist. Ein in den Strömungskanal 29 einragender Endbereich 51 des rohrförmigen Abschnittelements 37 ist hier dabei abgeschrägt ausgebildet. Zudem ragt der Messbereich 27 des Temperatursensors 23 an dem abgeschrägten Endbereich 51 des rohrförmigen Abschirmelements 37 von dem Abschirmelement 37 ab bzw. aus dem Aufnahmeraum 49 des Abschirmelements 37 heraus.

### Bezugszeichenliste

- 1: Vorrichtung
- 3: Verdichter
- 5: Verdampfer
- 7: Turbine
- 9: Kondensator
- 11: Kreisprozess-Fluid
- 13: Kurve
- 15: Kurve
- 17: Kurve
- 19: Fluidleitung
- 21: Fluidleitung
- 23: Temperatursensor
- 25: Steuergerät
- 27: Messbereich
- 29: Strömungskanal
- 31: Ausnehmung
- 33: Wand
- 37: Abschirmelement
- 39: Profil-Endbereich
- 41: Profil-Endbereich
- 43: Innenseite
- 44: Ablösekante
- 45: Keilspitze
- 47: Innenseite
- 49: Aufnahmeraum
- 51: Endbereich

## Patentansprüche

1. Vorrichtung zur Erzeugung von nutzbarer Energie, wobei die Energie nach dem Prinzip eines rechtsläufigen thermodynamischen Dampfkreisprozesses erzeugbar ist, wobei wenigstens ein durchgehender Strömungskanal (29) vorgesehen ist, durch den ein mehrere Komponenten aufweisendes Kreisprozess-Fluid (11) des Kreisprozesses strömt, wobei wenigstens ein, einen Verdampfer bildender Wärmeübertrager (5) vorgesehen ist, mittels dem dem Kreisprozess-Fluid Wärmeenergie zuführbar ist, so dass ein Arbeitsmedium als Komponente des Kreisprozess-Fluides (11) verdampft, und wobei in einem definierten Nahbereich im Bereich eines Fluidaustritts (22) des Verdampfers (5) ein Temperatursensor (23) angeordnet ist, mittels dem die Temperatur des aus dem Verdampfer (5) ausströmenden Kreisprozess-Fluids (11) messbar ist, **dadurch gekennzeichnet, dass** dem Temperatursensor (23) wenigstens ein Abschirmelement (37) zugeordnet ist, mittels dem der Temperatursensor (23) derart abgeschirmt ist, dass wenigstens eine nicht verdampfte flüssige Komponente des auf den Temperatursensor (23) zuströmenden Kreisprozess-Fluids (11) mittels des Abschirmelements (37) an dem Temperatursensor (23) vorbeileitbar ist.

2. Vorrichtung nach Anspruch 1, **dadurch gekennzeichnet, dass** das Abschirmelement (37) oder ein Abschirmbereich des Abschirmelements (37), im Querschnitt quer durch den Strömungskanal (29) gesehen, den Temperatursensor (23) verdeckt und/oder nach außen überragt.

3. Vorrichtung nach Anspruch 1 oder 2, **dadurch gekennzeichnet, dass** ein Messbereich (27) des Temperatursensors (23) in den Strömungskanal (29) einragt.

4. Vorrichtung nach einem der vorhergehenden Ansprüche, **dadurch gekennzeichnet, dass** das Abschirmelement (37) durch einen Profilkörper gebildet ist, wobei bevorzugt vorgesehen ist, dass das Abschirmelement (37) mit einem Profil-Endbereich (39) in den Strömungskanal einragt und mit seinem anderen Profil-Endbereich (41) an einem den Strömungskanal (29) bildenden Körper (21) festgelegt ist.

5. Vorrichtung nach einem der vorhergehenden Ansprüche, **dadurch gekennzeichnet, dass** der Temperatursensor (23) durch ein Thermoelement gebildet ist, und/oder dass der Temperatursensor (23) stabförmig ausgebildet ist.

6. Vorrichtung nach einem der vorhergehenden Ansprüche, **dadurch gekennzeichnet, dass** das Abschirmelement (37), in Fluid-Strömungsrichtung gesehen, stromauf des Temperatursensors (23) angeordnet ist, wobei bevorzugt vorgesehen, dass der Temperatursensor (23) im Windschatten des Abschirmelements (37) angeordnet ist.

7. Vorrichtung nach Anspruch 6, **dadurch gekennzeichnet, dass** das Abschirmelement (37) mit einem definierten Abstand von dem Temperatursensor (23) beabstandet angeordnet ist, und/oder dass das Abschirmelement (37) in einem definierten Nahbereich im Bereich des Temperatursensors (23) angeordnet ist.

8. Vorrichtung nach Anspruch 6 oder 7, **dadurch gekennzeichnet, dass** das Abschirmelement (37) im Wesentlichen keilförmig ausgebildet ist, wobei bevorzugt vorgesehen ist, dass das Abschirmelement (37) mit einer Keilspitze (45) von dem Temperatursensor (23) abgewandt angeordnet ist und/oder dass die Höhe des keilförmigen Abschirmelements (37) in Fluid-Strömungsrichtung zunimmt.

9. Vorrichtung nach Anspruch 6 oder 7, **dadurch gekennzeichnet, dass** das durch einen Profilkörper gebildete Abschirmelement (37) im Querschnitt sichelförmig ausgebildet ist, wobei bevorzugt vorgesehen ist, dass das sichelförmige Abschirmelement (37) mit einer, eine konkave Oberfläche aufweisenden Innenseite (43) dem Temperatursensor (23) zugewandt angeordnet ist.

10. Vorrichtung nach einem der Ansprüche 1 bis 5, **dadurch gekennzeichnet, dass** das Abschirmelement (37) den Temperatursensor (23) zumindest bereichsweise ringförmig umgreift.

11. Vorrichtung nach Anspruch 10, **dadurch gekennzeichnet, dass** das durch einen Profilkörper gebildete Abschirmelement (37) halbrohrförmig und/oder im Querschnitt C-förmig ausgebildet ist, oder dass das Abschirmelement (37) durch ein Rohrelement gebildet ist, durch dessen Aufnahmeraum (49) der Temperatursensor (23) geführt ist.

12. Vorrichtung nach einem der vorhergehenden Ansprüche, **dadurch gekennzeichnet, dass** das stromauf des Temperatursensors (23) angeordnete Abschirmelement (37) wenigstens eine Ablösekante (44) aufweist, an der sich die an das Abschirmelement (37) angelegte, nicht verdampfte flüssige Komponente des Kreisprozess-Fluids von dem Abschirmelement (44) ablöst, wobei die wenigstens eine Ablösekante (44) derart angeordnet und ausgebildet ist, dass die abgelöste nicht verdampfte flüssige Komponente des Kreisprozess-Fluids an dem Temperatursensor (23) vorbeiströmt.

13. Vorrichtung nach einem der vorhergehenden Ansprüche, **dadurch gekennzeichnet, dass** der Temperatursensor (23), in Fluid-Strömungsrichtung gesehen, stromab des Verdampfers (5) angeordnet ist, wobei bevorzugt vorgesehen ist, dass der Temperatursensor (23) einer Fluidleitung (21) zugeordnet ist, mittels der der Verdampfer (5) strömungstechnisch mit einer stromab des Verdampfers (5) angeordneten Expansionsmaschine (7) des Kreisprozesses verbunden ist.

14. Vorrichtung nach einem der vorhergehenden Ansprüche, **dadurch gekennzeichnet, dass** das Arbeitsmedium des Kreisprozesses durch Ethanol gebildet ist, und/oder dass das Kreisprozess-Fluid (11) als weitere Komponente ein Medium aufweist, das eine höhere Siedetemperatur als das Arbeitsmedium aufweist, und/oder dass das Kreisprozess-Fluid (11) als weitere Komponente ein Schmiermedium zur Schmierung von bewegten Bauteilen im Kreisprozess aufweist.

15. Fahrzeug, mit einer Vorrichtung nach einem der vorhergehenden Ansprüche, wobei bevorzugt vorgesehen ist, dass die Energie mittels einer Energie-Rückgewinnungseinrichtung des Fahrzeugs erzeugt wird, mittels der nach dem Prinzip eines thermodynamischen Kreisprozesses aus der Wärmeenergie eines von einer Brennkraftmaschine des Fahrzeugs emittierten Abgases nutzbare Energie rückgewinnbar und/oder erzeugbar ist.

## Claims

1. Apparatus for generating useable energy, wherein the energy is able to be generated according to the principle of a clockwise thermodynamic steam cycle process, wherein provision is made of at least one continuous flow channel (29) through which a cycle process fluid (11), having multiple components, of the cycle process flows, wherein provision is made of at least one heat exchanger (5) which forms an evaporator and by means of which heat energy is able to be supplied to the cycle process fluid such that a working medium, as a component of the cycle process fluid (11), evaporates, and wherein arranged in a defined vicinity in the region of a fluid outlet (22) of the evaporator (5) is a temperature sensor (23) by means of which the temperature of the cycle process fluid (11) flowing out of the evaporator (5) is able to be measured, **characterized in that** at least one shielding element (37) is assigned to the temperature sensor (23), by means of which shielding element the temperature sensor (23) is shielded such that at least one non-evaporated liquid component of the cycle process fluid (11) flowing towards the temperature sensor (23) is able to be guided past the temperature sensor (23) by means of the shielding element (37).

2. Apparatus according to Claim 1, **characterized in that**, as seen in cross section transversely through the flow channel (29), the shielding element (37) or a shielding region of the shielding element (37) conceals and/or projects outwardly beyond the temperature sensor (23).

3. Apparatus according to Claim 1 or 2, **characterized in that** a measurement region (27) of the temperature sensor (23) projects into the flow channel (29).

4. Apparatus according to one of the preceding claims, **characterized in that** the shielding element (37) is formed by a profile body, wherein it is preferably provided that the shielding element (37) projects with one profile end region (39) into the flow channel and is fixed with its other profile end region (41) to a body (21) forming the flow channel (29).

5. Apparatus according to one of the preceding claims, **characterized in that** the temperature sensor (23) is formed by a thermal element, and/or **in that** the temperature sensor (23) is of rod-shaped form.

6. Apparatus according to one of the preceding claims, **characterized in that**, as seen in the fluid flow direction, the shielding element (37) is arranged upstream of the temperature sensor (23), wherein it is preferably provided that the temperature sensor (23) is arranged in the slipstream of the shielding element (37).

7. Apparatus according to Claim 6, **characterized in that** the shielding element (37) is arranged spaced apart by a defined spacing from the temperature sensor (23), and/or in that the shielding element (37) is arranged in a defined vicinity in the region of the temperature sensor (23).

8. Apparatus according to Claim 6 or 7, **characterized in that** the shielding element (37) is of substantially wedge-shaped form, wherein it is preferably provided that the shielding element (37) is arranged with a wedge tip (45) facing away from the temperature sensor (23), and/or **in that** the height of the wedge-shaped shielding element (37) increases in the fluid flow direction.

9. Apparatus according to Claim 6 or 7, **characterized in that** the shielding element (37) formed by a profile body is of sickle-shaped form in cross section, wherein it is preferably provided that the sickle-shaped shielding element (37) is arranged with an inner side (43), having a concave surface, facing towards the temperature sensor (23).

10. Apparatus according to one of Claims 1 to 5, **characterized in that** the shielding element (37) engages at least regionally in an annular manner around the temperature sensor (23).

11. Apparatus according to Claim 10, **characterized in that** the shielding element (37) formed by a profile body is of half tube-shaped form and/or, in cross section, of C-shaped form, or **in that** the shielding element (37) is formed by a tube element through whose receiving space (49) the temperature sensor (23) is guided.

12. Apparatus according to one of the preceding claims, **characterized in that** the shielding element (37) arranged upstream of the temperature sensor (23) has at least one separation edge (44), at which the non-evaporated liquid component, attached to the shielding element (37), of the cycle process fluid is separated from the shielding element (44), wherein the at least one separation edge (44) is arranged and formed such that the separated non-evaporated liquid component of the cycle process fluid flows past the temperature sensor (23).

13. Apparatus according to one of the preceding claims, **characterized in that**, as seen in the fluid flow direction, the temperature sensor (23) is arranged downstream of the evaporator (5), wherein it is preferably provided that the temperature sensor (23) is assigned to a fluid line (21) by means of which the evaporator (5) is connected in terms of flow to an expansion machine (7) of the cycle process that is arranged downstream of the evaporator (5).

14. Apparatus according to one of the preceding claims, **characterized in that** the working medium of the cycle process is formed by ethanol, and/or **in that** the cycle process fluid (11) has, as a further component, a medium which has a higher boiling temperature than the working medium, and/or **in that** the cycle process fluid (11) has, as a further component, a lubricant for lubricating moved components in the cycle process.

15. Vehicle, having an apparatus according to one of the preceding claims, wherein it is preferably provided that the energy is generated by means of an energy recovery device of the vehicle, by means of which energy recovery device it is possible to recover and/or generate, according to the principle of a thermodynamic cycle process, useable energy from the heat energy of an exhaust gas emitted by an internal combustion engine of the vehicle.

## Revendications

1. Dispositif de production d'énergie exploitable, dans lequel l'énergie peut être générée selon le principe d'un processus cyclique de vapeur thermodynamique en sens horaire, dans lequel il est prévu au moins un canal d'écoulement continu (29) dans lequel s'écoule un fluide de processus cyclique à plusieurs constituants (11) du processus cyclique, dans lequel il est prévu au moins un échangeur de chaleur (5) formant un évaporateur au moyen duquel de l'énergie thermique peut être délivrée au fluide de processus cyclique, de sorte qu'un agent de travail s'évapore en tant que constituant du fluide de processus cyclique (11), et dans lequel un capteur de température (23) est disposé dans une zone proche définie dans la région d'une sortie de fluide (22) de l'évaporateur (5), au moyen duquel la température du fluide de processus cyclique (11) sortant de l'évaporateur (5) peut être mesurée,
**caractérisé en ce qu'**au moins un élément de protection (37) est associé au capteur de température (23), au moyen duquel le capteur de température (23) est protégé de manière à ce qu'au moins un constituant liquide non évaporé du fluide de processus cyclique (11) circulant vers le capteur de température (23) puisse être amené à passer par le capteur de température (23) au moyen de l'élément de protection (37).

2. Dispositif selon la revendication 1, **caractérisé en ce que** l'élément de protection (37) ou une zone de protection de l'élément de protection (37), lorsqu'on l'observe en coupe transversale transversalement au canal d'écoulement (29), masque le capteur de température (23) et/ou dépasse vers l'extérieur.

3. Dispositif selon la revendication 1 ou 2, **caractérisé en ce qu'**une zone de mesure (27) du capteur de température (23) dépasse dans le canal d'écoulement (29).

4. Dispositif selon l'une des revendications précédentes, **caractérisé en ce que** l'élément de protection (37) est formé par un corps profilé, dans lequel il est de préférence prévu que l'élément de protection (37) dépasse dans le canal d'écoulement par une zone d'extrémité de profil (39) et soit fixé par son autre zone d'extrémité de profil (41) à un corps (21) formant le canal d'écoulement (29).

5. Dispositif selon l'une des revendications précédentes, **caractérisé en ce que** le capteur de température (23) est formé par un thermocouple, et/ou **en ce que** le capteur de température (23) est réalisé sous la forme d'une tige.

6. Dispositif selon l'une des revendications précédentes, **caractérisé en ce que** l'élément de protection (37), lorsqu'on l'observe dans la direction d'écoulement du fluide, est disposé en amont du capteur de température (23), dans lequel il est de préférence prévu que le capteur de température (23) soit disposé dans le sillage de l'élément de protection (37).

7. Dispositif selon la revendication 6, **caractérisé en ce que** l'élément de protection (37) est espacé d'une distance définie du capteur de température (23) et/ou **en ce que** l'élément de protection (37) est disposé dans une zone de proximité définie dans la région du capteur de température (23).

8. Dispositif selon la revendication 6 ou 7, **caractérisé en ce que** l'élément de protection (37) est réalisé de manière à présenter sensiblement une forme de coin, dans lequel il est de préférence prévu que l'élément de protection (37) soit disposé de manière à ce qu'une extrémité de coin (45) soit tournée à l'opposé du capteur de température (23) et/ou que la hauteur de l'élément de protection en forme de coin (37) augmente dans la direction d'écoulement du fluide.

9. Dispositif selon la revendication 6 ou 7, **caractérisé en ce que** l'élément de protection (37) formé par un corps profilé présente une section transversale en forme de faucille, dans lequel il est de préférence prévu que l'élément de protection en forme de faucille (37) soit disposé de manière à ce qu'un côté intérieur (43) présentant une surface concave soit tourné vers le capteur de température (23).

10. Dispositif selon l'une des revendications 1 à 5, **caractérisé en ce que** l'élément de protection (37) entoure de manière annulaire au moins par zones le capteur de température (23).

11. Dispositif selon la revendication 10, **caractérisé en ce que** l'élément de protection (37) formé par un corps profilé est réalisé de manière à présenter une forme semi-tubulaire et/ou en C en section transversale, ou **en ce que** l'élément de protection (37) est formé par un élément tubulaire dont l'espace de réception (49) reçoit le capteur de température (23).

12. Dispositif selon l'une des revendications précédentes, **caractérisé en ce que** l'élément de protection (37) disposé en amont du capteur de température (23) comporte au moins un bord de séparation (44) où le constituant liquide non évaporé du fluide de processus cyclique appliqué sur l'élément de protection (37) se sépare de l'élément de protection (44), dans lequel ledit au moins un bord de séparation (44) est agencé et réalisé de manière à ce que le constituant liquide non évaporé séparé du fluide de processus cyclique s'écoule en passant par le capteur de température (23).

13. Dispositif selon l'une des revendications précédentes, **caractérisé en ce que** le capteur de température (23), lorsqu'on l'observe dans la direction d'écoulement du fluide, est disposé en aval de l'évaporateur (5), dans lequel il est de préférence prévu que le capteur de température (23) soit associé à une conduite de fluide (21) au moyen de laquelle l'évaporateur (5) est relié par communication fluidique à une machine d'expansion (7) du processus cyclique, laquelle est disposée en aval de l'évaporateur (5).

14. Dispositif selon l'une des revendications précédentes, **caractérisé en ce que** l'agent de travail du processus cyclique est formé par de l'éthanol, et/ou **en ce que** le fluide de processus cyclique (11) comporte en tant que constituant supplémentaire un agent présentant une température d'ébullition supérieure à celle de l'agent de travail et/ou **en ce que** le fluide de processus cyclique (11) comporte en tant que constituant supplémentaire un agent lubrifiant pour lubrifier des éléments mobiles dans le processus cyclique.

15. Véhicule équipé d'un dispositif selon l'une des revendications précédentes, dans lequel il est de préférence prévu que l'énergie soit générée au moyen d'un dispositif de récupération d'énergie du véhicule, au moyen duquel de l'énergie exploitable selon le principe d'un processus cyclique thermodynamique peut être extraite et/ou générée à partir de l'énergie thermique d'un gaz d'échappement émis par un moteur à combustion interne du véhicule.
